(19) Europäisches Patentamt
European Patent Office
Office européen des brevets

(11) **EP 2 881 909 A1**

(12) **EUROPEAN PATENT APPLICATION**

(43) Date of publication:
**10.06.2015 Bulletin 2015/24**

(51) Int Cl.:
***G06Q 30/06*** *(2012.01)*

(21) Application number: **13195591.6**

(22) Date of filing: **04.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens AG Österreich**
**1210 Wien (AT)**

(72) Inventor: **Dhungana, Deepak**
**2201 Seyring (AT)**

(74) Representative: **Maier, Daniel Oliver**
**Siemens AG**
**Postfach 22 16 34**
**80506 München (DE)**

(54) **System for computer-based, consumer-specific product configuration applications**

(57) Subject of the present invention is a System for computer-based consumer-specific product configuration applications comprising:
- a personal product configuration client (PPCC), which has access to
- a private preference database (PPDB) with the private data of the consumer;
- producers data gate (PDG), used by the vendors of different products to provide the system with product data and
- a configuration infrastructure (CI) which performs the configuration process.

# FIG 1

**Description**

The invention concerns a System for consumer-specific product configuration applications.

The trend in product development is shifting away from large monolithic systems (one-for-all) to component based highly customizable solutions, to match the needs of individual consumers. A lot of effort is put in the product development process to keep the components loosely coupled, and to provide maximum customization possibilities. This enables exchangeability of components and different configuration parameters may be used to influence the behavior of existing components etc. To support the task of composing and deploying the right

components, product vendors typically use product configuration applications, which exploit a formal representation of the different components, their dependencies and constraints for computing a correct configuration.

Product configurators are therefore typically vendor and product-specific.

While vendor-specific configurators are convenient tools for the product developers, these do not consider how end-consumers look for products and how they select the different product features. Typically, different products owned by consumers are related to each other, in terms of their form, functionality, end-consumers' habits or his personal constraints. Such relationship is reflected in the products bought by the consumer, after he has gone through the painful exercise of searching, selecting and comparing different product variants from different vendors. We argue that this experience of end-consumer product configuration can be highly improved by building consumer-specific configurators.

For example, a company selling mobile phones provides configuration facilities (e.g., a web shop) for consumers based on the variants of the phones it sells. Suppose a consumer is looking for a mobile phone with large screen (elderly-consumer). He can find the device he requires by configuring it accordingly. If he wants to search for the same phone in another web shop, he must repeatedly enter all his preferences again. When the same consumer is looking for a TV in a web-shop selling TVs -- there he needs to specify his needs in another configuration application, even if some preferences could be deduced from his attempts to search for a mobile phone.

Typically, it is not possible for him to reuse his preferences from one configuration session, during the configuration of another product.

The disadvantages are:

- Repeated specification of preferences: The consumer can not reuse his preferences and constraints in different searches. Each product configuration is considered an independent activity. Some parameters, which may be applicable to several vendors or products, need to be repeatedly specified.
- Exclusion of personal constraints: It is not possible to configure products considering personal constraints, which may not be known or relevant to the producer. Each consumer has his personal restrictions, bias, or preferences. Consumers are not able to include these personal constraints in the product search or configuration.
- Comparison of offers: It is not possible to compare and select the offers of different producers and how they match ones own needs. The configuration parameters of one vendor may be in different scale, granularity or abstraction. This makes it difficult to deal compare the offers.

The invention will be described with reference to the following drawings.

Fig. 1 shows a schematic overview of an example of a system according to the invention.
Fig. 2 shows a schematic overview of a web based configuration infrastructure CI which performs the configuration process.

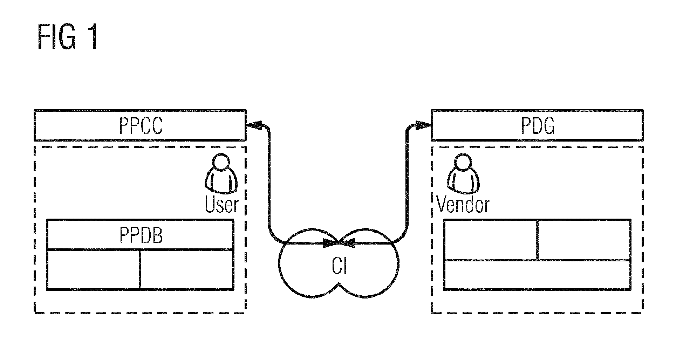

The system as shown in Fig.1 comprises a personal product configuration client PPCC, which has access to a private preference database PPDB with the private data of the consumer, that is to say his personal choices, history of products and personal constraints (e.g., short-sightedness). The system further comprises a producers data gate PDG, used by the vendors of different products to provide the system with product data and a web based configuration infrastructure CI which performs the configuration process.

The data provided of the consumer is handled strictly private and can be accessed only by the consumer himself and the al-located personal product configuration client PPCC.

Each consumer has the freedom of specifying what he likes, dislikes, requires or wishes to have independent of the vendor or the product he is looking for. These preferences are stored in the private space of the consumer and are not known to the producer. This private preference database PPDB also contains the history of the different products bought by the consumer, which makes it possible to identify inter-product constraints and use the information for checking compatibility of future products.

The format of the private preference database PPDB is principally not restricted. But in the core essence, it can be reduced to a set of parameters for all kinds of products the consumer wants to buy.

The vendors of different products also manage their data themselves, providing specialized data exchange services to communicate with the personal product configuration clients. From a mathematical point of view the problem can be defined as follows:

Let's assume a consumer $C_i$ defines a set of parameters and a set of constraints over these parameters.

$$C_i = \{C_iP_1, \ C_iP_2, \ ..., \ C_iP_n\}$$

Similarly, a vendor $V_j$ defines a set of configuration parameters for its products and the restrictions on the possible combinations.

$$V_j = \{V_jP_1, \ V_jP_2, \ ..., \ V_jP_m\}$$

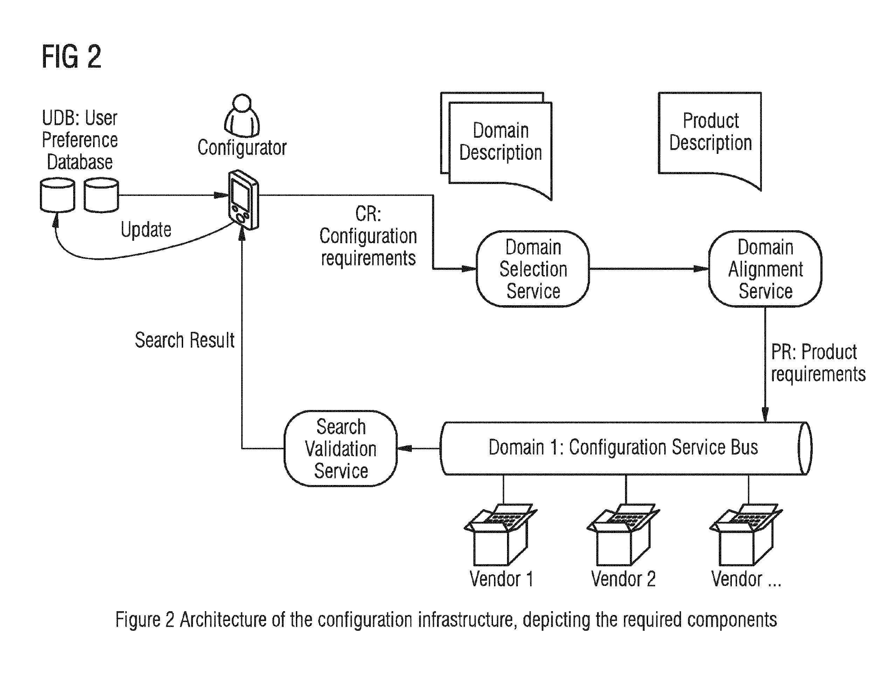

As shown schematically in Fig. 2 the configuration process is performed by a web based configuration infrastructure CI.

In this configuration process, a series of steps are involved. These steps make use of the information in the private preference database PPDB to automate certain steps update the database PPDB as required for future configuration sessions.

In the following, these steps will be described:

Requirements Specification: The configuration process starts with the specification of requirements for a desired product. This is done using the personal configuration application, which can access the private preference database PPDB of the consumer. He either chooses from the set of available options, or adds new category and options, if a new kind of product is to be configured.

Before configuration starts, the consumer chooses a subset of parameters he likes to use for the product configuration session. He specifies the kind of product he is looking for (e.g., a car, a mobile phone etc). Based on these two steps, the consumer's parameters are aligned automatically to the domain-ontology of the product category he chooses.

When a configuration session begins, the consumer chooses a set of parameters from his personal list. This is a subset of $C_i$. Additional parameters maybe automatically added to the configuration requirements (CR), if the parameters in $C_i$ are linked to some other variables through constraints.

$$CR \ OE \ C_i = \{C_iP_1, \ C_iP_2, \ ..., \ C_iP_c\}$$

It is important to note that the consumer of a product define their preferences, using parameters that are not vendor-dependent. The consumer may specify their requirements using the concepts that are understandable only for them.

The consumer-specific configuration tool is able to map the "language of the consumer" to standard concepts and notations that are common for the selected domain. The preferences of the consumer are made anonymous before the data is sent to the central domain alignment server. This step makes sure that the consumers' privacy is not hurt.

Domain Selection and Alignment: Based on the configuration requirements, the domain of interest is selected. This can be done either automatically using pattern matching algorithms or through direct input from the consumer. The preferences of the consumer are matched against well known concepts from the domain. Suppose the consumer is looking for a camera, she may specify the required mega-pixels in the photos - this is aligned to the standard concept "resolution" of pictures common in photography. A domain-ontology alignment service maps the parameters provided by the producer and the parameters specified by the consumer.

In this step, the configuration requirements are translated to a set of product requirements. This is done by mapping the variables in configuration requirement to variables in domain ontology. The domain of interest is considered to be $D_i$ with a set of parameters for configuring products from that domain.

$$D_i = \{D_jP_1, \ D_jP_2, \ ..., \ D_jP_k\}$$

Then, the product requirement PR is specified by a set of Domain concepts, gained through a mapping between the configuration requirements and domain concepts. Some configuration requirements CR cannot be mapped to the product requirements PR because these may be related to the personal constraints of the consumer (e.g., the consumer is blind).

$$PR = \{$$
$$D_jP_1 < C_iP_1,$$
$$D_jP_2 < C_iP_2,$$
$$...$$
$$D_jP_m < C_iP_n,$$
$$\} » \{C_iP_{n+1}, C_iP_2, ..., C_iP_c\} // personal\ parameters$$

Search: After the domain-alignment step, the requirements of the consumer are available in a comparable form, as they use the same concepts as standard ontologies for a domain.

To enable automated search, the producer of a product defines the attributes and constraints of the products it sells using a standard ontology for the domain. The producer does not provide a product-specific configurator but provides a mapping of product attributes to a domain-ontology.

Ideally, the search will be successful and perfectly matching products are found. But in many cases the search for a product results will result in a partial match.

Offers from different vendors are gathered based on what is available in their product databases. This is comparable to going to each vendors web site and finding the products that match ones needs. The difference is that the approach according to the invention fully automates this step. The result is a set of products matching the search criteria.

$$SearchResult = \{P_1, P_2, ..., P_y\}$$

Where $P_i$ is a product covering a subset of configuration requirements.

The search for the matching products relies on a smart reasoning component, capable of resolving as many constraints as possible, within a given time frame.

Validate: From all the gathered offers, the consumer is presented with a set of products that match his needs. It is possible, that some products are close to what the consumer is looking for but not a complete match. In such cases, the consumer is able to change his parameters, or accept results which slightly deviate from the initial requirements.

Update: The last step of the configuration process is updating the consumer preference database with the data collected or entered during the configuration session. This enables reusing the preferences of the current search and updated product information for considering the inter-product constraints in the next configuration session.

**Claims**

1. System for computer-based consumer-specific product configuration applications comprising:

   - a personal product configuration client (PPCC), which has access to
   - a private preference database (PPDB) with the private data of the consumer;
   - producers data gate (PDG), used by the vendors of different products to provide the system with product data and
   - a configuration infrastructure (CI) which performs the configuration process.

2. System according to claim 1, wherein the system is web based and the computers used by the consumer and the vendors have access to the internet.

3. System according to claim 1 or 2 performing the steps of:

- Specification of requirements for a desired product by use of a personal product configuration client (PPCC);
- Selection of domain and alignment;
- Searching for matching products
- Validating the result
- Updating the private preference database PPDB

FIG 1

## FIG 2

Figure 2 Architecture of the configuration infrastructure, depicting the required components

Europäisches
Patentamt

European
Patent Office

Office européen
des brevets

**EUROPEAN SEARCH REPORT**

Application Number

EP 13 19 5591

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/047045 A1 (GOPIKRISHNA GADE [US] ET AL GADE GOPIKRISHNA [US] ET AL) 23 February 2012 (2012-02-23) * the whole document * | 1-3 | INV. G06Q30/06 |
| X | US 2013/145274 A1 (JACOB SUSHIL GEORGE T [IN] ET AL) 6 June 2013 (2013-06-06) * the whole document * | 1-3 | |
| X | US 2008/208702 A1 (PETERMAN ANTHONY E [US] ET AL DEPTA SCOTT [US] ET AL) 28 August 2008 (2008-08-28) * the whole document * | 1-3 | |
| X | US 7 953 779 B1 (RAGUSA JEFFREY W [US] ET AL) 31 May 2011 (2011-05-31) * the whole document * | 1-3 | |

| | |
|---|---|
| | TECHNICAL FIELDS SEARCHED (IPC) |
| | G06Q |

The present search report has been drawn up for all claims

| Place of search | Date of completion of the search | Examiner |
|---|---|---|
| Munich | 17 February 2014 | Mülthaler, Evelyn |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 19 5591

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2014

| Patent document cited in search report | | Publication date | Patent family member(s) | | Publication date |
|---|---|---|---|---|---|
| US 2012047045 | A1 | 23-02-2012 | US 2012047045 A1<br>US 2013013446 A1<br>US 2014019292 A1<br>WO 2012024590 A2 | | 23-02-2012<br>10-01-2013<br>16-01-2014<br>23-02-2012 |
| US 2013145274 | A1 | 06-06-2013 | NONE | | |
| US 2008208702 | A1 | 28-08-2008 | US 2008208702 A1<br>US 2012246597 A1 | | 28-08-2008<br>27-09-2012 |
| US 7953779 | B1 | 31-05-2011 | US 7953779 B1<br>US 2011276439 A1<br>US 2013191766 A1 | | 31-05-2011<br>10-11-2011<br>25-07-2013 |

EPO FORM P0459

For more details about this annex : see Official Journal of the European Patent Office, No. 12/82